# EUROPEAN PATENT APPLICATION

(11) **EP 4 830 913 A1**
(43) Date of publication of application: **28.10.2026**
(21) Application number: 26174380.1
(22) Date of filing: 24.04.2026
(51) Int. Cl.: B32B 17/10, B32B 3/26, B60R 11/04, C03C 17/06, B60R 11/00

(54) **WINDSHIELD INNER GLASS CUT-OUT FOR CAMERA**

(30) Priority: 24.04.2025 US 202519188361
(71) Applicant: Tesla, Inc., Austin, TX 78725 (US)
(72) Inventor: MURTHY, Aditya Suresh, Austin, Texas, 78725 (US); ROCCHIO, Matthew Robert, Austin, Texas, 78725 (US); GOUGOUSSIS, Christos, Austin, 78725 (US); ROSENBERG, Ron, Austin, Texas, 78725 (US); DELGADO DE AGUILAR BOTELHO ROCHA, Joao Nuno, Austin, Texas, 78725 (US)
(74) Representative: Bryn-Jacobsen, Caelia

(57) **Abstract**

A windshield assembly for mounting a camera in an automotive vehicle can include an outer glass layer, a polymer layer, and an inner glass layer. The outer glass layer can be connected or connectable to the automotive vehicle. The outer glass layer can include an outer surface opposite an inner surface. The polymer layer can be connected to the inner surface of the outer glass layer. The inner glass layer can be connected to the polymer layer opposite the outer glass layer. The polymer layer and the inner glass layer can together form an opening extending through the inner glass layer and the polymer layer to expose the inner surface of the outer glass layer to a field of view of the camera. A camera bracket can be secured to the inner glass layer around the opening.

## Description

### BACKGROUND

In the field of automotive design, the integration of advanced sensor systems, such as cameras, into vehicle structures has become increasingly common. Cameras are often used for various functions such as obstacle detection and avoidance, navigation, autonomous or semi-autonomous driving. These cameras can be mounted in various locations around a vehicle to improve these functions, including locations in the front of the vehicle, such as on or near a windshield or front window of a vehicle.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates an isometric view of an automotive vehicle, according to some examples.
FIG. 2 illustrates a perspective view of a portion of an automotive vehicle, according to some examples.
FIG. 3 illustrates a cross-sectional view of a windshield assembly, according to some examples.
FIG. 4 illustrates a cross-sectional view of a windshield assembly, according to some examples.
FIG. 5 illustrates a cross-sectional view of a windshield assembly, according to some examples.
FIG. 6 illustrates a schematic view of a method of manufacturing one or more components of a windshield assembly, according to some examples.
FIG. 7 illustrates a schematic view of one or more systems of an automotive vehicle, according to some examples.

### DETAILED DESCRIPTION

As discussed above, sensors are becoming more common in modern vehicles. These sensors can provide a variety of functions, from aiding in navigation and parking, to enhancing safety features like collision avoidance systems, and for autonomous driving and assisted driving. The performance of these sensors can be influenced by the clarity and quality of the optical path between the external environment and the sensor itself. Traditional windshield designs often incorporate multiple layers of glass and polymer interlayers, which can introduce optical distortions, reflections, and other artifacts that may degrade the quality of the sensor's image output. As vehicles become more reliant on sensor input for autonomous operation and driver assistance, maintaining the integrity of the transmitted light through the windshield is a challenge that impacts the effectiveness of these systems.

This disclosure helps to address these issues (among others) by including a windshield assembly including an outer glass layer and an inner glass layer that has a cutout or removed section of the inner glass layer (and layer(s) in between), exposing the camera to only an outer glass layer, which can help reduce distortion of the camera. In some examples, an opening can be formed when the inner glass layer is initially cast or formed, instead of being cut out or removed therefrom afterwards. A cutout, removed section, or initially-formed opening can reduce the total optical media that light traverses before reaching a camera sensor. The bracket for the camera can be connected or mounted to the inner glass layer, which can help minimize the size of the opening or cutout for the camera. The windshield assembly can also include a filler layer adhered or adjacent the outer glass layer and the cutout components, which can help to seal the inner glass layer and intermediate layers, such as polymer layers, helping to limit the polymer layer(s) from flowing into the opening during lamination or other process of forming the windshield assembly.

The above discussion is intended to provide an overview of subject matter of the present patent application. It is not intended to provide an exclusive or exhaustive explanation of the invention. The description below is included to provide further information about the present patent application.

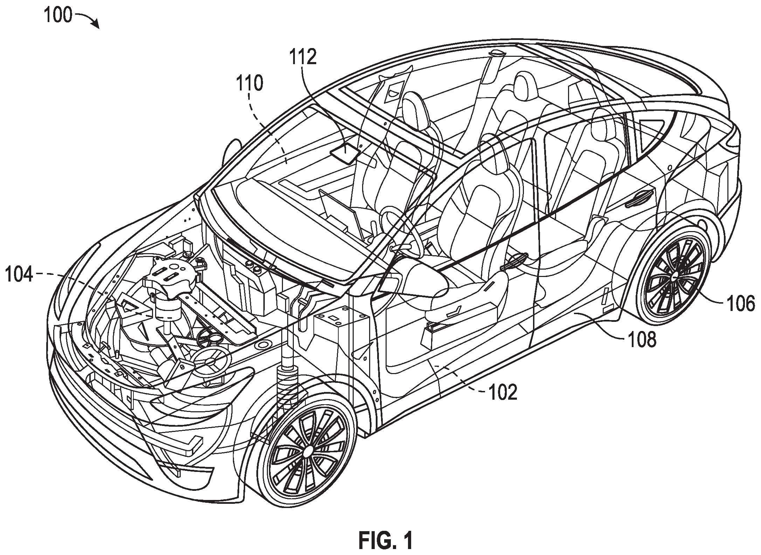

FIG. 1 is illustrates an isometric view of an automotive vehicle 100, according to some examples. The automotive vehicle 100 can be a car, vehicle, automobile, or the like, operable to transport occupants or items over a road or other terrain. The automotive vehicle 100 can include a chassis 102, a drivetrain 104, panels 106, and wheels 108. The wheels 108 can engage with a road or terrain and can be configured to support the automotive vehicle 100. The chassis 102 can support the drivetrain 104, which can be connected to the wheels 108. The drivetrain 104 can be operable to drive the wheels 108 to rotate such as to move the automotive vehicle 100. The panels 106 can be connected to the chassis 102 and can help to reinforce the chassis 102 and improve drag or air resistance during transportation. The automotive vehicle 100 can also include one or more seats or seat assemblies securable to the chassis 102 and configured to support, and help restrain, occupants within the automotive vehicle 100.

As discussed in further detail below, the automotive vehicle 100 can also include a windshield assembly 110 that can be secured or securable to the chassis 102 and can be transparent for occupant forward viewing while in the automotive vehicle 100. The windshield assembly 110 can include a camera portion 112, which can include a camera and a cutout that provides reduced obstruction or distortion for the camera and an image stream produced by the camera, as discussed in further detail below.

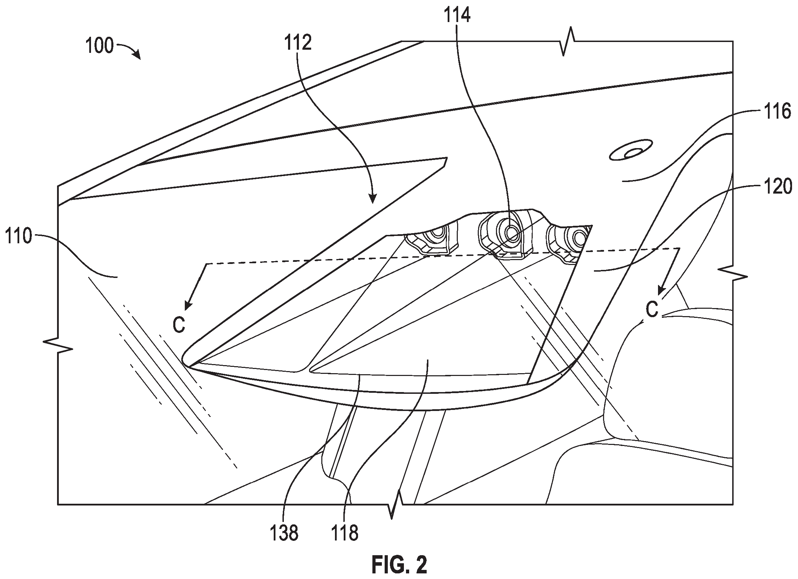

FIG. 2 illustrates a perspective view of a portion of the automotive vehicle 100, according to some examples. The automotive vehicle 100 can be consistent with the automotive vehicle 100 discussed above. FIG. 2 shows additional details of the automotive vehicle 100, such as of the further details of the windshield assembly 110 and the camera portion 112. As shown in FIG. 2, the camera portion 112 can include a camera 114, and a housing 116.

The camera 114 can be one or more optical sensors or devices configured to generate an image stream or image signal based on an optical field of view of the camera 114, such as a digital camera or the like. The camera 114 can be connected to a housing 116 that can at least partially surround the camera 114 and can be configured to protect the camera 114. The housing 116 can include a screen 118 and a mounting bracket 120.

The screen 118 can be configured to reduce glare, reflections or other conditions that can distort the image or image stream of the camera 114. The screen 118 can also be configured to capture debris if the windshield is compromised in the camera portion 112. The mounting bracket 120 can be connected to the camera 114 and can be connectable to the windshield (as discussed in further detail below), such as to secure the camera 114 to the windshield. As also discussed in further detail below, the windshield assembly 110 can be configured to reduce distortion of the camera 114. The windshield assembly 110 can also include a heating layer or heating element heating layer 138 that can be applied or adhered to an internal side of the windshield assembly 110, as discussed in further detail below.

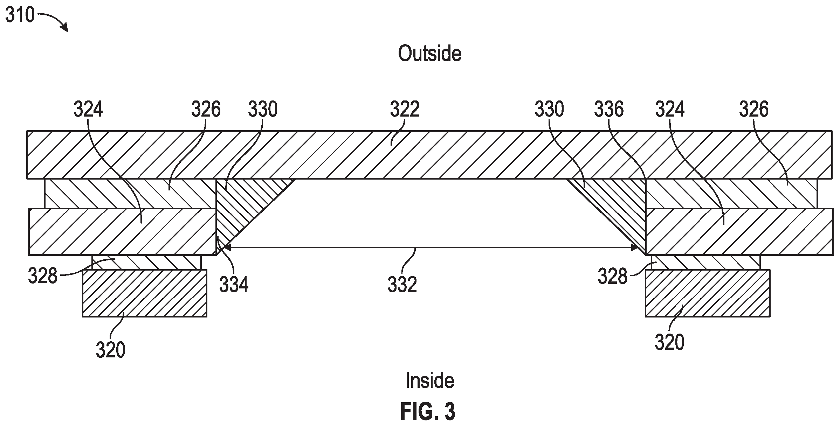

FIG. 3 illustrates a cross-sectional view of a windshield assembly 310, according to some examples. The windshield assembly 310 can be similar to the windshield assembly 110 discussed above and the windshield assembly 310 of FIG. 3 can be a cross-section of the windshield assembly 110 across indicators C-C of FIG. 2. The windshield assembly 310 can include a mounting bracket 320, an outer glass layer 322, an inner glass layer 324, a laminate layer 326, an adhesive layer 328, and a fill layer 330.

The outer glass layer 322 can be made of glass or safety glass, such as an annealed glass, tempered glass, toughened glass, or the like. The outer glass layer 322 can optionally be made of polymer composites, or the like. The outer glass layer 322 can be connected or connectable to the automotive vehicle 100 such as to the chassis 102. The outer glass layer 322 can be outward facing and configured to engage oncoming air or debris as the automotive vehicle 100 moves forward. The inner glass layer 324 can be similarly constructed such that the inner glass layer 324 can be made of glass or safety glass, such as an annealed glass, tempered glass, toughened glass, or the like. The inner glass layer 324 can optionally be made of polymer composites, or the like.

The laminate layer 326 can be made of a polymer, polymer composite, resin, or the like. For example, the laminate layer 326 can be made of polyvinyl butyral. The laminate layer 326 can be optionally made of glass, tempered, glass, or the like. The laminate layer 326 can be located adjacent the outer glass layer 322 and can be located adjacent the inner glass layer 324 such that the laminate layer 326 is located between the outer glass layer 322 and the inner glass layer 324. The laminate layer 326 can be bonded (e.g., thermally) to one or more of the outer glass layer 322 and the inner glass layer 324. The laminate layer 326 can also be adhered to the outer glass layer 322 and the inner glass layer 324.

The adhesive layer 328 can be an adhesive, such as a pressure activated, temperature activated, UV activated, or the like adhesive such as an epoxy, resin, or the like. The adhesive layer 328 can be applied to an inner side of the inner glass layer 324 and can be connected to, adjacent, or applied to the mounting bracket 320 such as to secure the mounting bracket 320 to an inner surface of the outer glass layer 322. The mounting bracket 320 can be a bracket, structure, or other component configured to secure a camera to the windshield assembly 310. The mounting bracket 320 can be similar to the mounting bracket 120 discussed above, such that the mounting bracket 320 can be part of the camera portion 112 of the automotive vehicle 100.

The fill layer 330 can also be an adhesive, such as a pressure activated, temperature activated, ultraviolet (UV) activated, or the like adhesive such as an epoxy, resin, or the like. The fill layer 330 can be applied to an edge or perimeter of an opening 332 that can be formed by one or more of the inner glass layer 324 and the laminate layer 326. That is, the inner glass layer 324 and the laminate layer 326 can together form the opening 332 such that the opening 332 of the inner glass layer 324 and the laminate layer 326 exposes a field of view of the camera (e.g., the camera 114) to only the inner surface of the opening 332, such that the opening 332 of the inner glass layer 324 and the laminate layer 326 eliminate (or significantly reduce) the inner glass layer 324 and the laminate layer 326 from the field of view of the camera. The opening 332 can be configured (e.g., sized or shaped) such that the opening 332 is complementary to a field of view of the camera. For example, the opening 332 can have a trapezoidal shape (such as shown in FIG. 2). To help accommodate this arrangement, the mounting bracket 320 can be secured to the inner glass layer 324 around the opening 332 such that the mounting bracket 320 does not interfere with, or enter, the field of view of the camera.

The fill layer 330 can be adhered to the inner surface of the outer glass layer 322 and can be adhered to edges 334 of the inner glass layer 324 and to edges 336 of the laminate layer 326, such as around an inner perimeter of the opening 332, which can help to form a seal between the inner glass layer 324, the laminate layer 326, and the outer glass layer 322 around an inner perimeter of the opening 332. This seal formed at least in part by the fill layer 330 can help to limit expansion of the inner glass layer 324 and the laminate layer 326 into the opening such as during lamination of the windshield assembly 310, which can be caused by thermal expansion during one or more processes to form the windshield assembly 310. The fill layer 330 can be sized or applied or adhered to the outer glass layer 322 and the inner glass layer 324 to limit interference with the opening 332 formed by the inner glass layer 324 and the laminate layer 326, helping to maintain a relatively consistent pressure to resist expansion of the laminate layer 326 and helping to further reduce distortion of the camera 114 or its output by the windshield assembly 310. For example, the fill layer 330 can be formed or adhered to the outer glass layer 322, the laminate layer 326, and the inner glass layer 324 such as to create or form relatively smooth transitions between the outer glass layer 322 and the inner glass layer 324, helping to reduce distortion of images capture by the camera 114.

A discussed above, fill layer 330 can be a cured resin, such as an epoxy resin or the like. The fill layer 330 can be temperature cured, chemically cured, or light-cured, such as cured via UV light. In some examples, the resin can be chosen from a diglycidyl ether of bisphenol F, a low epoxy equivalent weight diglycidyl ether of bisphenol A, a liquid epoxy novolac, a liquid aliphatic epoxy, a liquid cycloaliphatic epoxy, a 1,4-cyclohexandimethanoldiglycidylether, 3,4-epoxycyclohexylmethyl-3,4-epoxycyclohexane carboxylate, tetraglycidylmethylenedianiline, N,N,N',N'-tetraglycidyl-4,4' - methylenebisbenzenamine, a triglycidyl of para-aminophenol, N,N,N',N'-tetraglycidyl-m- xylenediamine, or a mixture thereof. In some examples, the acrylate resin can be chosen from a methacrylate, a methyl acrylate, a ethyl acrylate, a 2-chloroethyl vinyl ether, a 2-ethylhexyl acrylate, a hydroxyethyl methacrylate, a butyl acrylate, a butyl methacrylate, or a mixture thereof.

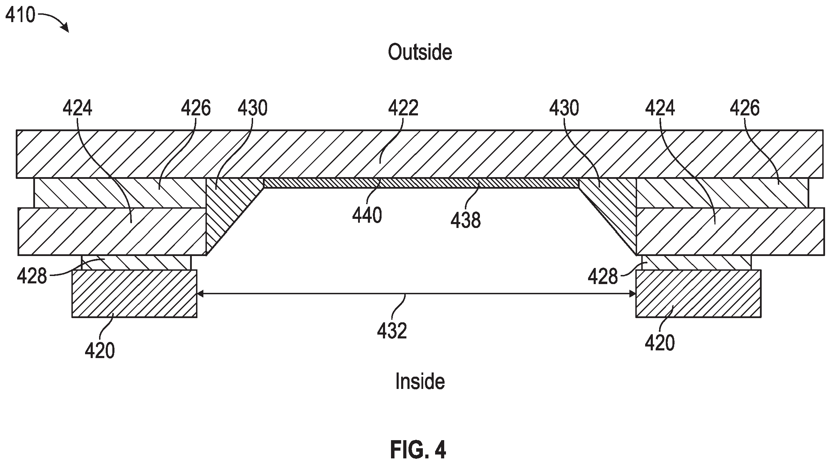

FIG. 4 illustrates a cross-sectional view of a windshield assembly 410, according to some examples. The windshield assembly 410 can be similar to the windshield assembly 110 or the windshield assembly 310 discussed above; the windshield assembly 410 can include a heating layer 438. Any of the windshield assemblies discussed above or below can include the features of the windshield assembly 410.

More specifically, the windshield assembly 410 can include a mounting bracket 420, an outer glass layer 422, an inner glass layer 424, a laminate layer 426, an adhesive layer 428, a fill layer 430, an opening 432, and a heating layer 438. The layers of the windshield assembly 410 can be constructed and arranged similarly to the layers of the windshield assembly 310 such that the laminate layer 426 is adhered to (or adjacent or connected to) an inner surface 440 of the outer glass layer 422. The inner glass layer 424 can be adhered to (or connected to or adjacent) an inner surface of the laminate layer 426. And, the mounting bracket 420 can be connected to (e.g., adhered to) an inner surface of the inner glass layer 424, such as by the adhesive layer 428. The mounting bracket 420, the inner glass layer 424, the laminate layer 426, and the adhesive layer 428 can define an opening 432 that can expose only the outer glass layer 422 to the camera (e.g., the camera 114), such as to help reduce distortion by the windshield assembly 410 to the camera or its image stream or output.

FIG. 4 also shows that the windshield assembly 410 can include a heating layer 438 connected to, adhered to, or adjacent an inner surface 440 of the outer glass layer 422. The heating layer 438 can be located at least partially within (or entirely within) the opening 432. The heating layer 438 can be or can include a conductive ink or a conductive paste applied to the inner surface 440 of the outer glass layer 422. In some examples, the heating layer 438 can include one or more conductive strips or wires such as one resistive heating elements that can extend between the opening 432. The heating layer 438 can include one or more heating elements that can be applied to or adhered to the internal inner surface 440 of the outer glass layer 422 in strips or rows, or in a pattern such as the pattern shown of the heating layer 138 of FIG. 2, such as arranged in multiple triangles or trapezoids. In some examples, the heating layer 438, such as using a heating paste, can be applied in patches or layers to form such a pattern. For example, the heating layer 438 can be applied in the triangle or trapezoidal pattern shown in FIG. 2.

The heating layer 438 can help to reduce or eliminate condensation (or fogging) on the inner surface 440 of the outer glass layer 422 and can help to prevent or reduce freezing of liquids on the outer surface of the outer glass layer 422, which can help reduce distortion in images or video captured by the camera. Also, because the heating layer 438 is not applied to the laminate layer 426, distortion of images produced by the camera (e.g., the camera 114) during heating or operation of the heating layer 438 can be reduced because heat is only being applied to the outer glass layer 422.

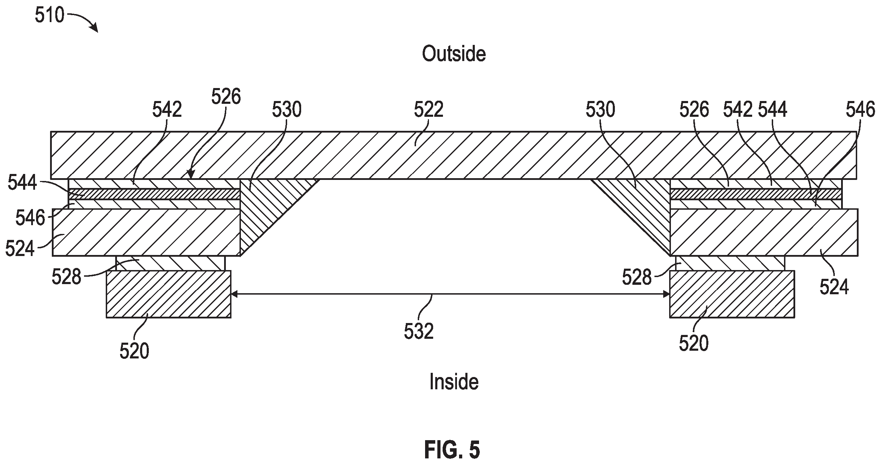

FIG. 5 illustrates a cross-sectional view of a windshield assembly 510, according to some examples. The windshield assembly 510 can be similar to the windshield assembly 110, the windshield assembly 310, or the windshield assembly 410 discussed above; the windshield assembly 510 can include a laminate layer or assembly including multiple layers. Any of the windshield assemblies discussed above or below can include the features of the windshield assembly 510.

More specifically, the windshield assembly 510 can include a mounting bracket 520, an outer glass layer 522, an inner glass layer 524, a laminate layer 526, an adhesive layer 528, a fill layer 530, an opening 532, a first polymer layer 542, and a second polymer layer 544. The layers of the windshield assembly 510 can be constructed and arranged similarly to the layers of the windshield assembly 310 such that the laminate layer 526 is adhered to (or adjacent or connected to) an inner surface of the outer glass layer 522. The inner glass layer 524 can be adhered to (or connected to or adjacent) an inner surface of the laminate layer 526. And, the mounting bracket 520 can be connected to (e.g., adhered to) an inner surface of the inner glass layer 524, such as by the adhesive layer 528.

The laminate layer 526 can be a laminate stack or assembly of layers. The laminate layer 526 can include a first polymer layer 542, a second polymer layer 544, and a third polymer layer 546. In some examples, the first polymer layer 542 and the third polymer layer 546 can be made of the same material, such as a polymer (e.g., polyvinyl butyral), and the second layer can be made of a different material such as polyethylene terephthalate (PET), which can help to reduce infrared light (IR) from entering the cabin. However, because PET can distort images or affect an output of a camera (e.g., the camera 114) it may be desirable to eliminate the PET layer (e.g., the third polymer layer 546) from the field of view of the camera.

The laminate layer 526 (including the first polymer layer 542, the second polymer layer 544, and the third polymer layer 546), the inner glass layer 524, the mounting bracket 520 (and the adhesive layer 528) can at least partially form or define an opening 532 that can expose only the outer glass layer 522 to the camera (e.g., the camera 114), such as to help reduce distortion by the windshield assembly 510 to the camera or its image stream or output. FIG. 5 also shows that the inner glass layer 524 can at least partially define the opening 532 and shows that the mounting bracket 520 can be secured to the inner glass layer 524 around the opening 532, helping to expose the camera to only the outer glass layer 522 or limiting exposure of the camera to layers other than the outer glass layer 522.

In some examples, the outer glass layer 522 can have a thickness between 1.5 millimeters (mm) and 4 mm. The first polymer layer 542 and the third polymer layer 546 can each have a thickness between 0.3 mm and 0.9 mm. Optionally, the first polymer layer 542 and the third polymer layer 546 can have a combine thickness of between 0.3 mm and 0.9 mm. The second polymer layer 544 (which can be a PET layer) can have a thickness between 40 micron and 150 micron. The inner glass layer 524 can have a thickness between 0.7 mm and 3 mm. Though the thicknesses are discussed with respect to the windshield assembly 510, any of the windshield assemblies discussed above or below can be similarly configured.

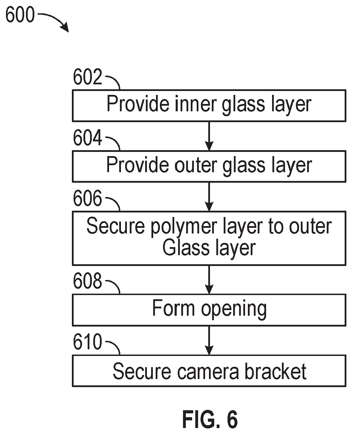

FIG. 6 illustrates a schematic view of a method 600, according to some examples. The method 600 can be a method of manufacturing one or more components of a windshield assembly. More specific examples of the method 600 are discussed below. The steps or operations of the method 600 are illustrated in a particular order for convenience and clarity; many of the discussed operations can be performed in a different sequence or in parallel without materially impacting other operations. The method 600 as discussed includes operations performed by multiple different actors, devices, or systems. It is understood that subsets of the operations discussed in the method 600 can be attributable to a single actor, device, or system could be considered a separate standalone process or method.

The method 600 can begin at a step 602 of providing an outer glass layer, such as providing the outer glass layer 322. At step 604, an inner glass layer can be provided, such as the inner glass layer 324. At step 616, a polymer layer can be connected to an inner surface of the outer glass layer and can be connected to an outer surface of the inner glass layer. At step 614, an opening can be formed in the polymer layer and the inner glass layer, the opening configured to expose a field of view of a camera only to the outer glass layer. At step 612, a camera bracket can be secured (e.g., adhered) to the inner glass layer around the opening.

In some examples, forming the cutout can include shaping the cutout to be trapezoidal to match the camera's field of view. In some examples, forming the cutout can include determining dimensions that minimize the reduction in impact strength of the windshield. In some examples, the method 600 can include applying a resin or fill layer to a periphery of the cutout to seal the inner glass layer from the outer glass layer. In some examples, the resin can be UV-cured. In some examples, the resin can be cured at a temperature range compatible with automotive standards.

In some examples, plastic laminate interlayer(s) can be removed from an area of the cutout or opening. In some examples, a heating element can be applied or adhered to an inner surface of the outer glass layer within the cutout area. In some examples, the heating element can be a silver paste or a conductive ink. In some examples, the heating element can be applied in a pattern of one or more straight lines across the inner surface of the outer glass layer within the opening. In some examples, the heating element can be applied on the inner surface of the outer glass layer within the opening in a pattern to form a shape that corresponds to a shape of a field of view of the camera.

In some examples, a glare shield can be secured to the camera assembly to block glare and protect the camera. In some examples, the the window assembly can include a PET layer secured to the polymer layer(s) for IR reflection, and the method can include removing the PET layer within the area of the opening or not extending the PET layer to the area of the opening.

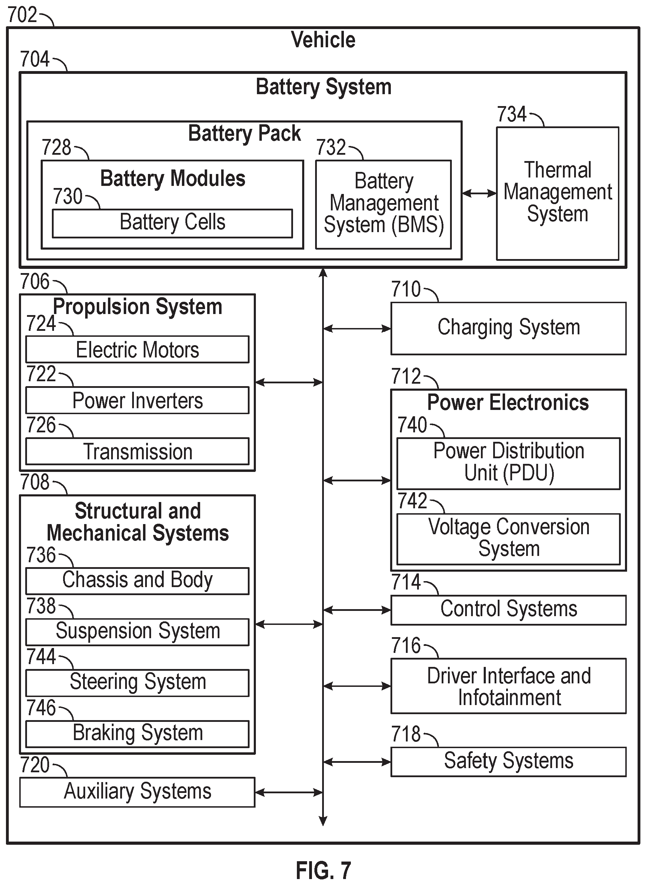

FIG. 7 is a system diagram illustrating an architecture of an electric vehicle (EV) 702, according to some examples. This diagram shows systems and subsystems that can collectively enable the functionality and operational efficiency of the electric vehicle 10.

The vehicle 702 (which can be the automotive vehicle 100) can include a number of higher-level systems which are interconnected, including a battery system 704, a propulsion system 706, structural and mechanical systems 708, a charging system 710, power electronics 712, control systems 714, driver interface and infotainment 716, safety systems 718, and auxiliary systems 720.

The propulsion system 722 includes one or more electric motors 6, which may include traction motors for propulsion and motors for regenerative braking systems, convert electrical energy into mechanical energy. Power inverters 724, facilitate the conversion of DC power from the battery to AC power required by the electric motors 726. The propulsion system also includes a transmission 728, which may consist of a single-speed transmission or gearbox, channeling mechanical power to the vehicle's wheels.

The battery system 704 is composed of several battery modules 730, each housing multiple battery cells 732. These battery cells 732 may be based on various chemistries, including lithium-ion, lithium-polymer, or solid-state materials, each offering distinct advantages in terms of energy density, recharge cycles, and safety profiles.

A battery management system (BMS) 734 continuously monitors various parameters, such as voltage, current, and temperature of each of the battery cells 732 and battery modules 730, to prevent conditions that could lead to overcharging, deep discharging, or thermal runaway. The battery management system (BMS) 734 also manages the state of charge (SoC) and state of health (SoH) of the battery, ensuring that the energy is distributed during discharge and that the charging process is optimized for longevity and safety. Each battery management system (BMS) 734 employs algorithms to balance the charge across the cells and modules, correcting imbalances that can reduce the battery's overall capacity and lifespan.

Integrated with the battery system 704 is a thermal management system 736, which operatively maintains the battery cells 732 within specified temperature ranges. The thermal management system 736 employs temperature sensors to monitor the heat generated by the battery cells 732 during operation. Based on the data collected, it activates cooling and heating mechanisms to regulate the battery's temperature. Cooling methods can include air cooling, where ambient air is circulated around the battery modules, or liquid cooling, where a coolant is circulated through channels in or around the battery modules to absorb and dissipate heat. In colder environments, the thermal management system 736 may employ heating elements or use waste heat from the vehicle's systems to warm the battery cells, ensuring they operate efficiently even in low temperatures.

The charging system 710 operatively replenishes the stored energy within the battery system 704 of the electric vehicle 702. It supports various charging methodologies to ensure flexibility and convenience in energy restoration. The charging system 710 may encompass systems for both standard (Level 1 and Level 2) and fast charging (DC fast charging), facilitating a range of charging speeds to suit different user needs and infrastructure capabilities.

For standard charging, the charging system 710 includes an onboard charger for AC/DC conversion. This onboard charger converts the alternating current (AC) from the electrical grid or home outlets into direct current (DC) that can be stored in the vehicle's battery system 704. The onboard charger may, for example support Level 1 and Level 2 charging, with Level 1 charging using standard household outlets (208-120V) and Level 2 charging requiring a higher voltage source (208-240V), such as those found in dedicated charging stations or installed in residential garages.

For fast charging, the charging system 710 may incorporate a DC fast charging system, designed for rapid energy transfer directly to the vehicle's battery system 704, bypassing the onboard charger. DC fast charging stations supply high-voltage (e.g., 400V to 800V) direct current directly to the battery system 704.

Additionally, the electric vehicle 702 may be equipped with an auxiliary battery, such as a 12V lead-acid or lithium-ion battery may be tasked with powering the vehicle's low-voltage systems, including lighting, infotainment, electronic control units, and other ancillary components, ensuring their operation even when the main battery system is off or during the initial stages of charging when the main system's voltage might be too low for these tasks. This separation of power sources enhances the vehicle's electrical system reliability and ensures the availability of essential functions.

Structural and mechanical systems 708, including a chassis and body 738 and suspension system 740, provide the physical framework and support for the vehicle 702. The chassis and body 738 constitute the vehicle's primary structure, while the suspension system 740, which may include springs, shock absorbers (or dampers), and control arms, to provide a smooth and stable ride by mitigating road shocks and vibrations.

Power electronics 712, including a power distribution unit (PDU) 742 and a voltage conversion system 744, are responsible for the management and conversion of electrical power within the vehicle. The power distribution unit (PDU) 642, equipped with fuses and relays, distributes power to various vehicle systems, while voltage conversion devices of the voltage conversion system 644, such as DC/DC and AC/DC converters, adjust the voltage levels to meet the specific requirements of different components.

Control systems 714 can facilitate the driver's command over the vehicle, with a steering system 746 and a braking system 748 as examples. The steering system 746, including a power steering motor, allows for precise directional control, whereas the braking system 648, which may feature disc brakes and an anti-lock braking system (ABS), enables deceleration and stopping. The control systems 714 can also control or operate the heating element(s) and the camera(s) discussed above.

The driver interface and infotainment 716 supports the driving experience by providing vehicle information and entertainment options through digital displays and multimedia systems. Connectivity features, such as Bluetooth and USB, further augment functionality.

Safety systems 718, designed to protect the vehicle's occupants, may include airbag systems and advanced driver-assistance systems (ADAS), for example. ADAS may use an array of sensors, cameras, radar, LiDAR, and/or ultrasonic devices to monitor the vehicle's surroundings, detect potential hazards, and execute or suggest corrective actions to prevent accidents and mitigate their impact.

ADAS can be categorized into different levels of self-driving capabilities, ranging from Level 0, where the human driver performs all driving tasks, to Level 5, which represents full automation with no human intervention required under any circumstances. Levels 1 and 2 focus on driver assistance and partial automation, respectively, where systems such as adaptive cruise control, lane-keeping assistance, and automatic emergency braking support the driver but do not replace them. Level 3, conditional automation, allows the vehicle to handle all aspects of driving in certain conditions, but requires the driver to be ready to take control when needed. Level 4, high automation, enables the vehicle to operate independently in most scenarios, though human override is still possible.

Examples of ADAS that contribute to these levels of automation include, but are not limited to, adaptive cruise control, which adjusts the vehicle's speed to maintain a safe distance from vehicles ahead; lane departure warning systems, which alert the driver when the vehicle begins to drift out of its lane; and automatic parking systems, which assist or take over control of the vehicle during parking maneuvers. More advanced systems, contributing to higher levels of automation, involve complex algorithms and machine learning capabilities to interpret sensor data, predict actions of other road users, and make real-time driving decisions.

Auxiliary systems 720 support the vehicle's functions and occupant comfort, with climate control and lighting systems as examples. The auxiliary systems 620 may also include windshield wipers etc.

As noted above, the systems of the 702 are communicatively connected. Communications between the interconnected systems within vehicle 602 are facilitated through a vehicle network architecture, employing both hardware and software components to ensure seamless data exchange and coordination. This network architecture may includes one or more vehicle communication buses, such as for example Controller Area Network (CAN), Local Interconnect Network (LIN), FlexRay, and Ethernet, which serve as the backbone for intra-vehicle communications.

The Controller Area Network (CAN) bus is a vehicle bus standard designed to allow microcontrollers and devices to communicate with each other within the vehicle 702 without a host computer. Such a network may support control communications between systems such as the battery system 704, propulsion system 706, and control systems 714, due to its high reliability and resistance to interference. A CAN bus may supports messages that ensure real-time control and monitoring of these systems.

For other communications, such as those involving the driver interface and infotainment 716 or auxiliary systems 720, a Local Interconnect Network (LIN) bus may be employed. LIN may provide a cost-effective, low-speed serial communication system for connecting intelligent sensors and actuaries. It may serve as a sub-network to the CAN bus, handling signals such as switch inputs and actuator outputs.

FlexRay technology offers a higher data rate compared to CAN and LIN, providing the necessary bandwidth for advanced control systems, including those required for autonomous driving functionalities within safety systems 718. Its deterministic nature and fault tolerance make it suitable for applications that require precise timing and synchronization, such as coordinating the actions of multiple control units in real-time.

Ethernet, with its high data transfer rate, may for example be adopted for diagnostics and infotainment applications within the vehicle 702. It supports the rapid transfer of large volumes of data, making it well suited for advanced driver assistance systems (ADAS), software updates, and multimedia streaming in the driver interface and infotainment 716 system.

Software protocols and application programming interfaces (APIs) built on top of these physical layers enable high-level communication and data exchange between systems. These protocols may define the rules for data format, timing, and error handling, ensuring that messages are correctly interpreted and acted upon by the receiving systems.

The following, non-limiting examples, detail certain aspects of the present subject matter to solve the challenges and provide the benefits discussed herein, among others.

Example 1 is a windshield assembly for mounting a camera in an automotive vehicle, the windshield assembly comprising: an outer glass layer connected or connectable to the automotive vehicle, the outer glass layer including an outer surface opposite an inner surface; a polymer layer connected to the inner surface of the outer glass layer; an inner glass layer connected to the polymer layer opposite the outer glass layer, the polymer layer and the inner glass layer together forming an opening extending through the inner glass layer and the polymer layer to expose the inner surface of the outer glass layer to a field of view of the camera; and a camera bracket secured to the inner glass layer around the opening.

In Example 2, the subject matter of Example 1 optionally includes wherein the opening of the inner glass layer and the polymer layer exposes the field of view of the camera to only the inner surface of the outer glass layer.

In Example 3, the subject matter of any one or more of Examples 1-2 optionally include wherein the opening of the inner glass layer and the polymer layer eliminate the inner glass layer and the polymer layer from the field of view of the camera.

In Example 4, the subject matter of any one or more of Examples 1-3 optionally include a fill layer adhered to the inner surface of the outer glass layer, to the polymer layer, and to the inner glass layer around an inner perimeter of the opening.

In Example 5, the subject matter of Example 4 optionally includes wherein the fill layer forms a seal between the inner glass layer, the polymer layer, and the outer glass layer around an inner perimeter of the opening.

In Example 6, the subject matter of Example 5 optionally includes wherein the fill layer is a cured resin.

In Example 7, the subject matter of any one or more of Examples 1-6 optionally include wherein the polymer layer is polyvinyl butyral.

In Example 8, the subject matter of any one or more of Examples 1-7 optionally include an adhesive layer located between the camera bracket and the inner glass layer to secure the camera bracket to the inner glass layer.

In Example 9, the subject matter of any one or more of Examples 1-8 optionally include a heating layer connected to the inner surface of the outer glass layer within the opening.

In Example 10, the subject matter of Example 9 optionally includes wherein the heating layer includes a conductive ink or a paste applied to the inner surface of the outer glass layer.

In Example 11, the subject matter of any one or more of Examples 1-10 optionally include wherein the opening is complementary to a shape of the field of view of the camera.

In Example 12, the subject matter of Example 11 optionally includes wherein the opening has a trapezoidal shape.

In Example 13, the subject matter of any one or more of Examples 1-12 optionally include a second polymer layer connected to the polymer layer between the inner glass layer and the outer glass layer, the second polymer layer, together with the polymer layer and the inner glass layer, forming the opening.

In Example 14, the subject matter of Example 13 optionally includes wherein the second polymer layer is made of polyethylene terephthalate.

Example 15 is a windshield assembly for mounting a camera in an automotive vehicle, the windshield assembly comprising: an outer glass layer connected or connectable to the automotive vehicle, the outer glass layer including an outer surface opposite an inner surface; a polymer layer adhered to the inner surface of the outer glass layer; an inner glass layer adhered to the polymer layer opposite the outer glass layer, the polymer layer and the inner glass layer together forming an opening extending through the inner glass layer and the polymer layer so that the polymer layer and the inner glass layer are not within a field of view of the camera; and a camera bracket secured to the inner glass layer around the opening.

In Example 16, the subject matter of Example 15 optionally includes wherein the opening of the inner glass layer and the polymer layer exposes the field of view of the camera to only the inner surface of the outer glass layer.

In Example 17, the subject matter of Example 16 optionally includes a fill layer adhered to the inner surface of the outer glass layer, to the polymer layer, and to the inner glass layer around an inner perimeter of the opening to form a seal between the inner glass layer, the polymer layer, and the outer glass layer around an inner perimeter of the opening.

In Example 18, the subject matter of Example 17 optionally includes an adhesive layer located between the camera bracket and the inner glass layer to secure the camera bracket to the inner glass layer.

In Example 19, the subject matter of Example 18 optionally includes a heating layer connected to the inner surface of the outer glass layer within the opening.

In Example 20, the subject matter of Example 19 optionally includes a second polymer layer connected to the polymer layer between the inner glass layer and the outer glass layer, the second polymer layer, together with the polymer layer and the inner glass layer, forming the opening, the second polymer layer made of polyethylene terephthalate.

Example 21 is a windshield for a vehicle comprising: an outer glass layer; an inner glass layer; a cutout in the inner glass layer positioned to align with a camera lens, wherein the cutout is configured to reduce the total optical media that light traverses before reaching the camera sensor; and a camera mounting bracket attached to the inner surface of the inner glass layer and positioned laterally outward from the edges of the cutout.

In Example 22, the subject matter of Example 21 optionally includes wherein the cutout is trapezoidal in shape to match the camera's field of view.

In Example 23, the subject matter of any one or more of Examples 21-22 optionally include wherein the cutout has dimensions that minimize the reduction in impact strength of the windshield.

In Example 24, the subject matter of any one or more of Examples 21-23 optionally include a resin applied to the periphery of the cutout to seal the inner glass layer from the outer glass layer.

In Example 25, the subject matter of Example 24 optionally includes wherein the resin is UV-cured.

In Example 26, the subject matter of any one or more of Examples 24-25 optionally include wherein the resin is cured at a temperature range compatible with automotive standards.

In Example 27, the subject matter of any one or more of Examples 21-26 optionally include wherein the outer glass layer and the inner glass layer are devoid of a plastic laminate interlayer within the area of the cutout.

In Example 28, the subject matter of any one or more of Examples 21-27 optionally include a heating element integrated within the cutout area.

In Example 29, the subject matter of Example 28 optionally includes wherein the heating element comprises a silver paste.

In Example 30, the subject matter of any one or more of Examples 28-29 optionally include wherein the heating element comprises conductive ink.

In Example 31, the subject matter of any one or more of Examples 28-30 optionally include wherein the heating element is patterned in straight lines across the cutout.

In Example 32, the subject matter of any one or more of Examples 28-31 optionally include wherein the heating element is patterned to form a shape that corresponds to the camera's field of view.

In Example 33, the subject matter of any one or more of Examples 21-32 optionally include millimeters.

In Example 34, the subject matter of any one or more of Examples 21-33 optionally include millimeters.

In Example 35, the subject matter of any one or more of Examples 21-34 optionally include a glare shield as part of the camera assembly positioned to block glare and protect the camera.

In Example 36, the subject matter of any one or more of Examples 21-35 optionally include wherein the inner glass layer includes a PET layer for IR reflection, and the PET layer is removed within the area of the cutout.

In Example 37, the subject matter of any one or more of Examples 21-36 optionally include wherein the design minimizes optical distortion due to thermal expansion, particularly in relation to the placement of the heating element.

In Example 38, the subject matter of any one or more of Examples 1-37 optionally include wherein the outer glass layer is multilayered.

In Example 39, the apparatuses or method of any one or any combination of Examples 1 - 38 can optionally be configured such that all elements or options recited are available to use or select from.

The above detailed description includes references to the accompanying drawings, which form a part of the detailed description. The drawings show, by way of illustration, specific examples that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The term "about," as used herein, means approximately, in the region of, roughly, or around. When the term "about" is used in conjunction with a numerical range, it modifies that range by extending the boundaries above and below the numerical values set forth. In general, the term "about" is used herein to modify a numerical value above and below the stated value by a variance of 10%. In one aspect, the term "about" means plus or minus 10% of the numerical value of the number with which it is being used. Therefore, about 50% means in the range of 45%-55%. Numerical ranges recited herein by endpoints include all numbers and fractions subsumed within that range (e.g., 1 to 5 includes 1, 1.5, 2, 2.75, 3, 3.90, 4, 4.24, and 5). Similarly, numerical ranges recited herein by endpoints include subranges subsumed within that range (e.g., 1 to 5 includes 1-1.5, 1.5-2, 2-2.75, 2.75-3, 3-3.90, 3.90-4, 4-4.24, 4.24-5, 2-5, 3-5, 1-4, and 2-4). It is also to be understood that all numbers and fractions thereof are presumed to be modified by the term "about."
Further examples are set out in the clauses below:
1. A windshield assembly for mounting a camera in an automotive vehicle, the windshield assembly comprising:
   an outer glass layer connected or connectable to the automotive vehicle, the outer glass layer including an outer surface opposite an inner surface;
   a polymer layer connected to the inner surface of the outer glass layer;
   an inner glass layer applied to the polymer layer opposite the outer glass layer, the polymer layer and the inner glass layer together forming an opening extending through the inner glass layer and the polymer layer to expose the inner surface of the outer glass layer to a field of view of the camera; and
   a camera bracket secured to the inner glass layer around the opening.
2. The windshield assembly of any one of the preceding clauses, wherein the opening of the inner glass layer and the polymer layer exposes the field of view of the camera to only the inner surface of the outer glass layer.
3. The windshield assembly of any one of the preceding clauses, wherein the opening of the inner glass layer and the polymer layer eliminate the inner glass layer and the polymer layer from the field of view of the camera.
4. The windshield assembly of any one of the preceding clauses, comprising:
   a fill layer adhered to the inner surface of the outer glass layer, to the polymer layer,
   and to the inner glass layer around an inner perimeter of the opening.
5. The windshield assembly of clause 4, wherein the fill layer forms a seal between the inner glass layer, the polymer layer, and the outer glass layer around an inner perimeter of the opening.
6. The windshield assembly of clause 5, wherein the fill layer is a cured resin.
7. The windshield assembly of any one of the preceding clauses, wherein the polymer layer is polyvinyl butyral.
8. The windshield assembly of any one of the preceding clauses, comprising:
   an adhesive layer located between the camera bracket and the inner glass layer to secure the camera bracket to the inner glass layer.
9. The windshield assembly of any one of the preceding clauses, comprising:
   a heating layer connected to the inner surface of the outer glass layer within the opening.
10. The windshield assembly of clause 9, wherein the heating layer includes a conductive ink or a paste applied to the inner surface of the outer glass layer.
11. The windshield assembly of any one of the preceding clauses, wherein the opening is complementary to a shape of the field of view of the camera.
12. The windshield assembly of clause 11, wherein the opening has a trapezoidal shape.
13. The windshield assembly of any one of the preceding clauses, comprising:
   a second polymer layer connected to the polymer layer between the inner glass layer and the outer glass layer, the second polymer layer, together with the polymer layer and the inner glass layer, forming the opening.
14. The windshield assembly of clause 13, wherein the second polymer layer is made of polyethylene terephthalate.
15. The windshield assembly of clause 13, wherein the outer glass layer is multilayered.
16. A windshield assembly for mounting a camera in an automotive vehicle, the windshield assembly comprising:
   an outer glass layer connected or connectable to the automotive vehicle, the outer glass layer including an outer surface opposite an inner surface;
   a polymer layer adhered to the inner surface of the outer glass layer;
   an inner glass layer connected to the polymer layer opposite the outer glass layer, the polymer layer and the inner glass layer together forming an opening extending through the inner glass layer and the polymer layer so that the polymer layer and the inner glass layer are not within a field of view of the camera; and
   a camera bracket secured to the inner glass layer around the opening.
17. The windshield assembly of clause 16, wherein the opening of the inner glass layer and the polymer layer exposes the field of view of the camera to only the inner surface of the outer glass layer.
18. The windshield assembly of clause 17, comprising:
   a fill layer adhered to the inner surface of the outer glass layer, to the polymer layer, and to the inner glass layer around an inner perimeter of the opening to form a seal between the inner glass layer, the polymer layer, and the outer glass layer around an inner perimeter of the opening.
19. The windshield assembly of clause 18, comprising:
   an adhesive layer located between the camera bracket and the inner glass layer to secure the camera bracket to the inner glass layer.
20. The windshield assembly of clause 19, comprising:
   a heating layer connected to the inner surface of the outer glass layer within the opening.

The above description is intended to be illustrative, and not restrictive. For example, the above-described examples (or one or more aspects thereof) may be used in combination with each other. Other examples may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment.

## Claims

1. A windshield assembly for mounting a camera in an automotive vehicle, the windshield assembly comprising:
an outer glass layer connected or connectable to the automotive vehicle, the outer glass layer including an outer surface opposite an inner surface;
a polymer layer connected to the inner surface of the outer glass layer;
an inner glass layer applied to the polymer layer opposite the outer glass layer, the polymer layer and the inner glass layer together forming an opening extending through the inner glass layer and the polymer layer to expose the inner surface of the outer glass layer to a field of view of the camera; and
a camera bracket secured to the inner glass layer around the opening.

2. The windshield assembly of claim 1, wherein the opening of the inner glass layer and the polymer layer exposes the field of view of the camera to only the inner surface of the outer glass layer.

3. The windshield assembly of claim 1 or 2, wherein the opening of the inner glass layer and the polymer layer eliminate the inner glass layer and the polymer layer from the field of view of the camera.

4. The windshield assembly of any one of the preceding claims, comprising:
a fill layer adhered to the inner surface of the outer glass layer, to the polymer layer, and to the inner glass layer around an inner perimeter of the opening.

5. The windshield assembly of claim 4, wherein the fill layer forms a seal between the inner glass layer, the polymer layer, and the outer glass layer around an inner perimeter of the opening.

6. The windshield assembly of claim 5, wherein the fill layer is a cured resin.

7. The windshield assembly of any one of the preceding claims, wherein the polymer layer is polyvinyl butyral.

8. The windshield assembly of any one of the preceding claims, comprising:
an adhesive layer located between the camera bracket and the inner glass layer to secure the camera bracket to the inner glass layer.

9. The windshield assembly of any one of the preceding claims, comprising:
a heating layer connected to the inner surface of the outer glass layer within the opening.

10. The windshield assembly of claim 9, wherein the heating layer includes a conductive ink or a paste applied to the inner surface of the outer glass layer.

11. The windshield assembly of any one of the preceding claims, wherein the opening is complementary to a shape of the field of view of the camera; and optionally wherein the opening has a trapezoidal shape.

12. The windshield assembly of any one of the preceding claims, comprising:
a second polymer layer connected to the polymer layer between the inner glass layer and the outer glass layer, the second polymer layer, together with the polymer layer and the inner glass layer, forming the opening.

13. The windshield assembly of claim 12, wherein the second polymer layer is made of polyethylene terephthalate; or optionally wherein the outer glass layer is multilayered.

14. A windshield assembly for mounting a camera in an automotive vehicle, the windshield assembly comprising:
an outer glass layer connected or connectable to the automotive vehicle, the outer glass layer including an outer surface opposite an inner surface;
a polymer layer adhered to the inner surface of the outer glass layer;
an inner glass layer connected to the polymer layer opposite the outer glass layer, the polymer layer and the inner glass layer together forming an opening extending through the inner glass layer and the polymer layer so that the polymer layer and the inner glass layer are not within a field of view of the camera; and
a camera bracket secured to the inner glass layer around the opening.

15. The windshield assembly of claim 14, wherein the opening of the inner glass layer and the polymer layer exposes the field of view of the camera to only the inner surface of the outer glass layer; and optionally comprising:
a fill layer adhered to the inner surface of the outer glass layer, to the polymer layer, and to the inner glass layer around an inner perimeter of the opening to form a seal between the inner glass layer, the polymer layer, and the outer glass layer around an inner perimeter of the opening; and optionally comprising:
an adhesive layer located between the camera bracket and the inner glass layer to secure the camera bracket to the inner glass layer.; and optionally comprising:
a heating layer connected to the inner surface of the outer glass layer within the opening.
